# NEUE EUROPÄISCHE PATENTSCHRIFT

(11) **EP 0 355 400 B2**
(45) Veröffentlichungstag und Bekanntmachung des Hinweises auf die Entscheidung über den Einspruch: **08.04.1998**
(45) Hinweis auf die Patenterteilung: 25.01.1995
(21) Anmeldenummer: 89113275.5
(22) Anmeldetag: 19.07.1989
(51) Int. Cl.: B01D 39/14, B01D 69/10

(54) **Filtermedium für kuchenbildende Filtrationsprozesse**
Filter medium for cake forming filtering operations
Agent filtrant pour des procédés de filtration formant des gâteaux

(30) Priorität: 26.08.1988 DE 3829010
(43) Veröffentlichungstag der Anmeldung: 28.02.1990
(73) Patentinhaber: Sefar AG, 8803 Rüschlikon (CH)
(72) Erfinder: Müller, Hans-Rudolf, CH-8038 Zürich (CH)
(74) Vertreter: Weber, Otto Ernst, Dipl.-Phys.

(56) Entgegenhaltungen:
- EP-A- 81 182
- EP-A- 0 082 393
- DE-A- 2 222 714
- DE-A- 2 629 719
- DE-A- 2 658 408
- DE-A- 3 629 805
- US-A- 2 197 805
- US-A- 2 944 017
- US-A- 3 592 767
- US-A- 4 134 742

## Beschreibung

Die Erfindung betrifft ein Filtermedium für kuchenbildende Filtrationsprozesse, welches zum einen die Merkmale des Oberbegriffs des Anspruchs 1 und zum anderen die Merkmale des Oberbegriffs des Anspruchs 2 aufweist.

Ein Filtermedium gemäß der Gattung des Anspruchs 1 ist in der DE-A-26 29 719 A1 offenbart. Dort ist eine Filtermembran auf einer flüssigkeitsdurchlässigen, als Drahtgewebe ausgestalteten Stützschicht angeordnet. Die vom Drahtgewebe abgewandte Seite der Filtermembran ist bei diesem bekannten Filter nicht verstärkt und daher gegen mechanische Einflüsse ungeschützt.

Ein Filtermedium gemäß der Gattung des Anspruchs 2 geht aus der DE-C-36 29 805 hervor. Zur Erhöhung der mechanischen Stabilität ist eine Membran zwischen zwei herkömmlichen Filtergeweben in Sandwich-Form eingelagert.

Aus der US-A-2,944,017 ist ein Filter bekannt, bei dem ein Verstärkungsgewebe in das Filtermedium eingelassen ist und von diesem umschlossen wird. Bei mechanischer Beanspruchung einer Oberflächenseite kann bei einem derartigen Filter eine Gewebefaser aus dem Filtermedium austreten. Es entsteht eine Fehlerstelle, die zu einem Riß und somit einem Leck entlang der Faser führen kann. Das Gewebe in diesem Filter stellt lediglich ein Traggerüst aber kein Schutzgerüst dar.

In der modernen Verfahrentechnik tritt vermehrt das Erfordernis auf, daß häufig sehr kleine Teilchen (Partikel) aus einer Suspension ausgefiltert werden müssen. Die bisher bekannten Filtermedien, d.h. gewebte oder genadelte Filtermedien, können schwerlich mit Öffnungen unter 10 µmµ und überhaupt nicht mehr mit Öffnungen unter 1 µm hergestellt werden. Es ist zwar grundsätzlich möglich, für derartige Anwendungszwecke Filtermembranen zu verwenden, derartige Membranen sind jedoch den groben mechanischen Anforderungen nicht gewachsen, welche die Filtrations technik stellt. Insbesondere beim Abheben oder Abwerfen des Filterkuchens wird das Filtermedium erheblichen mechanischen Belastungen ausgesetzt. Filtermembranen halten diesen Belastungen nicht in dem gewünschten Umfang stand.

Der Erfindung liegt daher die **Aufgabe** zugrunde, eine Filtermedium der eingangs genannten Gattung zu schaffen, welches einerseits zur Filtration von Suspensionen geeignet ist, die außerordentlich feine Partikel enthalten, und andererseits einen besonders robusten Aufbau besitzt, der eine hohe Betriebssicherheit und lange Lebensdauer des Filtermediums gewährleistet.

Diese Aufgabe wird sowohl durch die im kennzeichnenden Teil des Anspruchs 1 angegebenen Merkmale als auch durch die im kennzeichnenden Teil des Anspruchs 2 angegebenen Merkmale gelöst.

Im Gegensatz zum Stand der Technik wird beim Filtermedium der vorliegenden Erfindung die Filtermembran weder einseitig auf ein Schutzgerüst aufgebracht, noch wird das Schutzgerüst innerhalb der Filtermembran angeordnet; es wird vielmehr die Filtermembran in eine dreidimensionale Gewebekonstruktion eingebracht, so daß die Filtermembran innerhalb der Gewebekonstruktion liegt. Diese Ausgestaltung schützt die Filtermembran in sehr großem Maße gegen mechanische Einflüsse.

Vorzugsweise ist vorgesehen, daß die Filtermembran Öffnungen aufweist, die kleiner als 10 µm sind. Dabei kann vorzugsweise sogar vorgesehen sein, daß die Öffnungen in der Filtermembran als Microporen ausgebildet sind, die kleiner sind als 1 µm. Bei einer derartigen Ausgestaltung des erfindungsgemäßen Filtermediums wird die vorteilhafte Möglichkeit eröffnet, Suspensionen zu verarbeiten, bei denen herkömmliche Filtereinrichtungen nicht mehr einsetzbar sind.

In einer alternativen bevorzugten Ausführungsform der Erfindung kann auch vorgesehen sein, daß die Öffnungen in der Filtermembran nach dem Eindringen einer kompakten Membranmasse in die Gewebekonstruktion ausgebildet sind. Dabei besteht die Möglichkeit. die Öffnungen in der Filtermembran nach Anzahl und Größe des jeweiligen Erfordernisses besonders gut anzupassen.

Es ist erfindungsgemäß, wenn die Membranmasse auf die als Traggerüst ausgebildete, kompakte, starke Gewebelage aufgebracht ist und wenn die als Schutzgerüst ausgebildete Gewebelage in die obere Schicht der Membranmasse teilweise eingelassen ist. Hierdurch wird ein besonders hoher Schutz der Membran gewährleistet.

Die Erfindung wird nachfolgend beispielsweise anhand der Zeichnung beschrieben; in dieser zeigen:
- Fig. 1: Einen Schnitt durch ein erfindungsgemäßes Filtermedium, bei welchem eine Membranschicht in einem dreidimensionalen Gewebe angeordnet ist,
und
- Fig. 2: einen entsprechenden Schnitt durch eine alternative Ausführungsform des erfindungsgemäßen Filtermediums, bei welcher eine Membranschicht zwischen zwei Gewebelagen verankert ist.

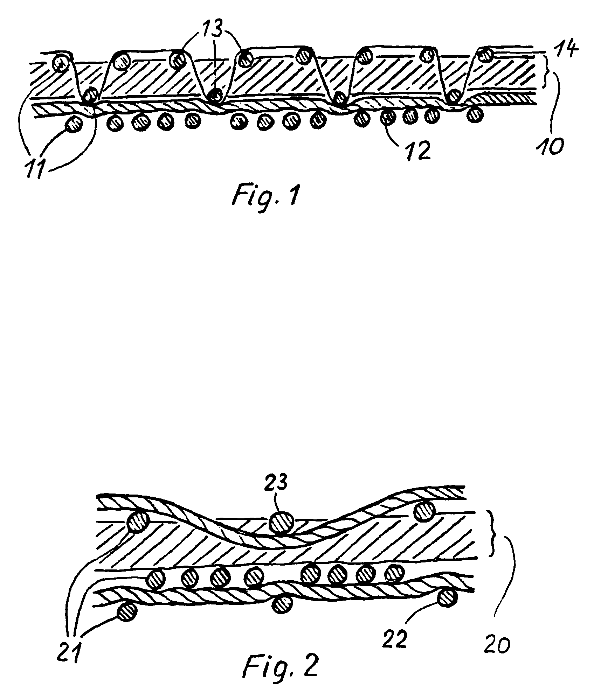

Die Figur 1 zeigt in einem Schnitt durch ein Filtermedium eine zu einer Filtermembran 10 geformte Membranmasse. die in eine dreidimensionale Gewebekonstruktion 11 eingebettet ist. Die auf der Unterseite dargestellte kompakte Gewebeseite dient als Tragergewebe 12 für die Filtermembran 10. Die auf der Oberseite veranschaulichte lockere Gewebeseite nimmt einerseits in sich die Filtermasse für die Filtermembran 10 auf und dient andererseits als Schutzgewebe 13 für die Filtermembran 10. Die obersten Gewebefäden 14 der Gewebekonstruktion 11 ragen aus der Filtermembran 10 heraus und schützen auf diese Weise die empfindliche Filtermembran 10 gegen mechanische Beanspruchungen und auf diese Weise insbesondere gegen Abrieb.

Die Figur 2 veranschaulicht in einem Schnitt eine Filtermembran 20, die zwischen einem Trägergewebe 22 und einem Schutzgewebe 23 angeordnet ist. Wie bei einer Sandwich-Anordnung ist bei dieser Ausführungsform die Filtermembran 20 in einer insgesamt mit 21 bezeichneten Gewebekonstruktion angeordnet, so daß auf beiden Seiten der empfindlichen Filtermembran 20 jeweils ein Gewebe die Filtermembran 20 vor mechanischen Beanspruchungen, Beschädigungen und/oder Zerstörungen schützt.

Die Filtermembran 20 ist praktisch zwischen zwei Gewebelagen eingeschlossen, nämlich zwischen dem Trägergewebe 22 und dem Schutzgewebe 23. Dabei ist die obere Gewebelage, nämlich das Schutzgewebe 23 in die Membranmasse eingelassen, welche die Filtermembran 20 bildet. Es eignet sich für diesen Zweck ein offenmaschiges Gewebe besonders gut als Oberflächenschutz der Filtermembran 20. Die Filtermembran 20 ist sowohl mit dem Trägergewebe 22 als auch mit dem Schutzgewebe 23 fest verbunden, und es kann das Schutzgewebe im Hinblick auf eine möglichst innige Verbindung in der Membranmasse fest verankert sein.

Es können die Membranmassen, welche die Filtermembran 10 oder die Filtermembran 20 bilden, aus mikro- oder submikroporösen Materialien bestehen, oder es können kompakte, dichte Materialien durch physikalische und/oder chemische Behandlungen mit der gewünschten Porosität versehen werden, nachdem die Verbindung zwischen der Filtermembran einerseits und der Gewebekonstruktion andererseits bereits hergestellt ist.

Bei besonders hohen Anforderungen könnten grundsätzlich auch mehr als eine Filtermembranschicht verwendet werden, mit der Maßgabe, daß jeweils beidseitig der Filtermembranschicht zumindest einige Gewebefäden der Gewebekonstruktion über die Filtermembran hinausragen, um einen mechanischen Schutz zu bieten.

## Patentansprüche

1. Filtermedium für kuchenbildende Filtrationsprozesse, mit einer durchströmbaren Filtermembran und einer stromabwärts angeordneten, als Traggerüst ausgebildeten Gewebekonstruktion,
dadurch **gekennzeichnet**,
daß die Gewebekonstruktion zusätzlich zum stromabwärtigen Traggerüst (12) ein stromaufwärts der Filtermembran (10) angeordnetes Schutzgerüst (13) aufweist,
daß die Gewebekonstruktion (11) aus einem dreidimensionalen Gewebe besteht, welches eine erste, kompakte Gewebeseite (12) und eine zweite, lockere Gewebeseite (13) aufweist, wobei die erste, kompakte Gewebeseite (12) das stromabwärtige Traggerüst und die zweite, lockere Gewebeseite (13) das stromaufwärtige Schutzgerüst bilden,
daß die obersten Gewebefäden (14) der lockeren Gewebeseite (13) stromaufwärts zumindest teilweise über die Membranmasse hinausragen und
daß die Filtermembran (10) in die aus Trag- und Schutzgerüst bestehende Gewebekonstruktion (11) eingebettet ist.

2. Filtermedium für kuchenbildende Filtrationsprozesse, mit einer durchströmbaren Filtermembran und einer Gewebekonstruktion, welche aus zwei unabhängigen Gewebelagen (22, 23) besteht, von denen die eine Gewebelage (22) stromabwärts der Filtermembran (20) und die andere Gewebelage (23) stromaufwärts angeordnet ist und die Filtermembran (20) zwischen den beiden Gewebelagen (22, 23) eingebettet ist,
**dadurch gekennzeichnet,**
daß die stromabwärts angeordnete Gewebelage (22) als ein Traggerüst ausgebildet ist,
daß die Membranmasse auf die als Traggerüst ausgebildete kompakte, starke Gewebelage (22) aufgebracht ist,
daß die stromaufwärts angeordnete Gewebelage (23) als ein Schutzgerüst ausgebildet ist,
daß die als Schutzgerüst ausgebildete Gewebelage (23) als offenmaschiges, weniger kompaktes Gewebe ausgebildet ist und
daß die als Schutzgerüst ausgebildete Gewebelage (23) in die obere Schicht der Membranmasse teilweise eingelassen ist.

3. Filtermedium nach Anspruch 1 oder 2,
dadurch **gekennzeichnet**,
daß die Filtermembran (10; 20) Mikroporen aufweist, die kleiner sind als 10 µm.

4. Filtermedium nach Anspruch 1 oder 2,
dadurch **gekennzeichnet**,
daß die Filtermembran (10; 20) Mikroporen aufweist, die kleiner sind als 1 µm.

5. Filtermedium nach einem der vorhergehenden Ansprüche,
dadurch **gekennzeichnet**,
daß die Mikroporen in der Filtermembran (10; 20) nach dem Eindringen einer kompakten Membranmasse in die Gewebekonstruktion (11; 21) ausgebildet sind.

## Claims

1. Filter medium for cake-forming filtration processes comprising a filter membrane, through which a filtrate can pass, and a downstream located fabric structure serving as support structure
**characterized** in that
in addition to the downstream support structure (12), said fabric structure also comprises a protective structure (13) located upstream of the filter membrane (10),
that the fabric structure (11) consists of a three-dimensional fabric, which has a first, compact fabric side (12) and a second, loose fabric side (13), the first compact fabric side (12) forming the downstream support structure and the second loos fabric side (13) forming the upstream protective structure,
that the top fabric threads (14) of the loose fabric side (13) project at least partly over the membrane material and
that the filter membrane (10) is embedded in the fabric structure (11) consisting of a support structure and a protective structure.

2. Filter medium for cake-forming filtration processes with a filter membrane, through which a filtrate can pass, and a fabric structure, which consists of two independent fabric layers (22, 23), one fabric layer (22) being located downstream of the filter membrane (20) and the other fabric layer (23) being located upstream, and the filter membrane (20) is embedded between both fabric layers (22, 23)
**characterized** in that
the fabric layer (22) located downstream is formed as a support structure,
the membrane material is applied to the compact,
strong fabric layer (22) forming the support structure,
the fabric layer (23) located upstream is formed as a protective structure,
the fabric layer (23) forming the protective structure is formed as a open-mesh, less compact fabric, and
the fabric layer (23) forming the protective structure is at least partly embedded in the upper layer of the membrane material.

3. Filter medium according to claim 1 or 2,
**characterized** in that
the filter membrane (10; 20) has openings smaller than 10 µm.

4. Filter medium according to claim 1 or 2,
**characterized** in that
the filter membrane (10; 20) has openings smaller than 1 µm.

5. Filter medium according to one of the preceding claims,
**characterized** in that
the openings in the filter membrane (10; 20) are formed following the penetration of a compact membrane material into the fabric structure (11; 21).

## Revendications

1. Milieu filtrant pour des processus de filtration avec formation de gâteaux, comprenant une membrane filtrante traversée par la suspension à filtrer et une structure tissée disposée en aval et réalisée sous forme d'ossature de support,
caractérisé par le fait
que la structure tissée présente, en plus de l'ossature de support (12) aval, une ossature de protection (13) disposée en amont de la membrane filtrante (10),
que la structure tissée (11) est constituée d'un tissu tri-dimensionnel présentant une première face de tissu (12) compacte et une deuxième face de tissu (13) lâche, la première face de tissu (12) compacte constituant l'ossature de support aval et la deuxième face de tissu (13) lâche formant l'ossature de protection amont,
que les fils supérieurs (14) de la face de tissu (13) lâche dépassent côté amont au moins partiellement de la masse de membrane, et
que la membrane filtrante (10) est incorporée à la structure tissée (11) constituée par l'ossature de support et l'ossature de protection.

2. Milieu filtrant pour des processus de filtration avec formation de gâteaux, comprenant une membrane filtrante traversée par la suspension à filtrer et une structure tissée consistant en deux couches tissées indépendantes (22; 23), l'une des couches tissées (22) est arrangée en aval et l'autre en amont de la membrane filtrante (20) et la membrane filtrante (20) est insérée entre les deux couches de tissu (22, 23),
caractérisé par le fait
que la couche tissée (22) disposée en aval est réalisée sous forme d'ossature de support,
que la masse de membrane est appliquée sur la couche tissée (22) épaisse, compacte, réalisée sous forme d'ossature de support,
que la couche tissée (23) disposée en amont présente une ossature de protection,
que la couche tissée (23) formant l'ossature de protection amont est réalisée sous forme de tissu à mailles ouvertes, moins compacte, et
que la couche de tissu (23) réalisée sous forme d'ossature de protection est encastrée partiellement dans la couche supérieure de la masse de membrane.

3. Milieu filtrant selon la Revendication 1 ou 2,
caractérisé par le fait que la membrane filtrante (10; 20) présente des micropores de taille inférieure à 10 µm.

4. Milieu filtrant selon la Revendication 1 ou 2,
caractérisé par le fait que la membrane filtrante (10; 20) présente des micropores de taille inférieure à 1 µm.

5. Milieu filtrant selon l'une quelconque des Revendications précédentes, caractérisé par le fait que les micropores sont réalisées dans la membrane filtrante (10; 20) après pénétration d'une masse de membrane compacte dans la structure tissée (11; 21).
